Europäisches Patentamt

European Patent Office

Office européen des brevets

(19)

(11) EP 1 164 796 B1

(12) **EUROPEAN PATENT SPECIFICATION**

(45) Date of publication and mention
of the grant of the patent:
**20.12.2006 Bulletin 2006/51**

(51) Int Cl.:
***H04N 7/173*** *(2006.01)*

(21) Application number: **00401679.6**

(22) Date of filing: **14.06.2000**

(54) **Process and system for video on demand**

Verfahren und System für Video-auf-Anfrage

Procédé et système de vidéo à la demande

(84) Designated Contracting States:
**DE ES FR GB IT**

(43) Date of publication of application:
**19.12.2001 Bulletin 2001/51**

(73) Proprietor: **EADS ASTRIUM SAS**
**31402 Toulouse Cedex 4 (FR)**

(72) Inventor: **Gomez, Etienne**
**31000 Toulouse (FR)**

(74) Representative: **Loisel, Bertrand et al**
**Cabinet Plasseraud**
**52 rue de la Victoire**
**75440 Paris Cedex 09 (FR)**

(56) References cited:
**EP-A- 0 633 694**      **WO-A-92/11713**
**WO-A-96/13125**      **US-A- 5 793 412**
**US-A- 5 884 141**

• **PATENT ABSTRACTS OF JAPAN vol. 1997, no. 12, 25 December 1997 (1997-12-25) & JP 09 219852 A (SONY CORP), 19 August 1997 (1997-08-19)**

**Description**

The invention relates to Video-On-Demand (VOD) provided by a server to users provided with a view box via a telecommunication network or a satellite link, possibly through the Internet.

Serving various programs by broadcasting them repeatedly, each new broadcast beginning when the preceding has ended, does not satisfy users. On the other hand serving the selected video program on a separate channel to each user upon request is expensive and inefficient.

For satisfying a user's request for a video program without too much delay, an approach known as Near-Video-On-Demand (N-VOD) has been developed, wherein each video program is repeatedly made available at a fixed staggered time interval, thereby reducing the maximum delay to the staggered time interval, which is typically several minutes.

An improvement strongly reducing the maximum time delay between the user's request and the availability of the video program is known as Hybrid-Video-On-Demand (HVOD). A description of that approach is given in US - A 5 682 597 to which reference may be made. According to that approach, multiple copies of each program are continuously sent on separate channels and again the start of each copy is offset by a staggered time interval. At the user's end, VOD requests which are not synchronous with the beginning of a transmission are initially fulfilled with the start of a specific additional transmission of the beginning portion of the selected video program for that user, while simultaneously maintaining use of the NVOD transmission for that requestor. The in-progress transmission of the selected video program is stored in a buffer associated with the viewbox and spliced to a conclusion of the beginning portion of the video program for output by the viewbox and display.

That approach requires specific transmission of the beginning portion of the selected video program on request by only one user and still increases the amount of network resources which are required. Network resources can be saved by providing a large size buffer in the viewbox and storing the beginning portion of each of the video programs once for each period during which the programs remain unchanged (once a week for instance). Then there is no need to transmit the beginning portion of a selected program to the respective requestor. The volume of data to be transmitted is reduced and transmission of the beginning portions may take place when the network load is low. A user's request for an in-progress program is initially and immediately fulfilled by reading the beginning portion from the buffer while the remaining portion is stored for later readout after splicing. A buffer allowing simultaneous read -out and writing is necessary, since storage proceeds after splicing. A description of that approach is given in EP 0 633 694.

A limiting factor in the implementation of that approach is the buffer size. Typically transmissions of all video or multimedia programs on the network start at the same time. For any selected program to be immediately available to a user even in the worst conditions, when the request takes place just before a new transmission of the N programs takes place, the buffer capacity required for storing the beginning portions is little less than N times the staggered time interval. A shorter staggered time interval and conversely a greater number of simultaneous time offset transmissions of a same program require a lesser buffer size but increasingly draw on network resources.

It is an object of the invention to provide an enhanced VOD system and process using a buffer for storing beginning portions of the available programs which spares network or satellite link resources for a given buffer size. The invention is defined by claims 1 and 14.

The above and additional features will appear from the following description of particular embodiments of the invention, given by way of examples only. The description refers to the accompanying drawings, wherein :

Fig. 1 is a timing diagram for illustrating the main feature of Hybrid Video On Demand ;
Fig. 2 is a timing diagram illustrating the requirements for a system with storage in a buffer, when all transmissions begin at the same time ;
Fig. 3 is a time diagram illustrating a particular embodiment;
Fig. 4 is a time diagram illustrating another embodiment ; and
Fig. 5 is a simplified block diagram of a server - user system according to the invention.

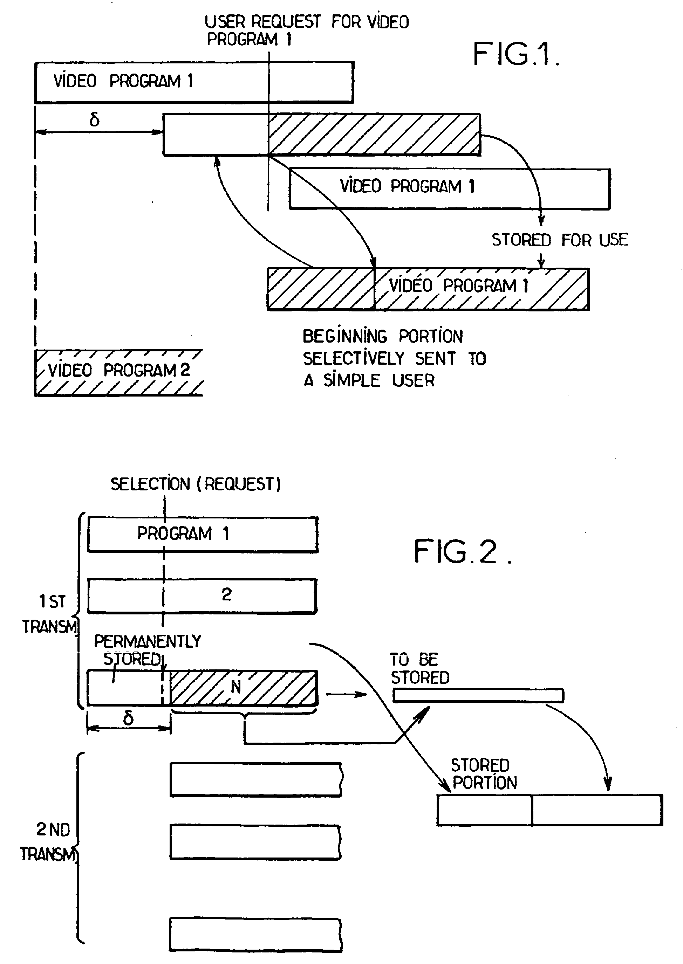

For purpose of comparison Fig. 1 indicates the time relationship between successive transmissions of two video programs 1 and 2 by a server in a HVOD system . Successive transmissions of program 1 take place at times separated by intervals δ. A request R by an user, at a time t asynchronous with the beginning of a transmission. The request is initially and immediately fulfilled by a specific transmission of the beginning portion to that single user for immediate display without storage. During that specific transmission, the user's terminal also processes the in-progress transmission and stores it in a buffer of the viewbox. At the end of the beginning portion (earlier than the stored portion), as indicated for example by a flag stored at the server, the specific transmission is stopped and read out of the buffer is initiated. The stored portion is spliced to the end of the beginning portion and at the same time the portion of the program not yet transmitted is stored in the buffer.

Referring now to Fig. 2, an improved version reducing the need for transmision resources requires a buffer having an increased capacity for continuously storing the beginning portions of alla video programs. Typically, all N video programs are initiated at the same instant. If there is a requirement that the user be able to start watching any program, including when zapping from a program he or she was watching, the buffer has to store data transmitted for N times the staggered time duration, at least if immediate availability is required even in the worst case ( request just before a new transmission of the selected program begins, as indicated on Fig.2). Then the buffer size (storable number of Mbytes) C is :

$$C = N \cdot \delta \cdot \beta$$

where

N is the number of different video programs,
$\delta$ is the staggered time intervals between two successive transmissions of a same program,
$\beta$ is the bit rate for one program.

That means that there is a relation between the maximum buffer capacity Co assigned to storage of the beginning portions, the staggered time intervals and the number of simultaneous transmissions which are required , conditioned by the number of different video programs and the staggered time interval. For a given capacity Co and a required number N of programs, there should be a sufficient number of simultaneous transmissions for the staggered time interval $\delta$ to be lower than Co / (N . $\beta$)

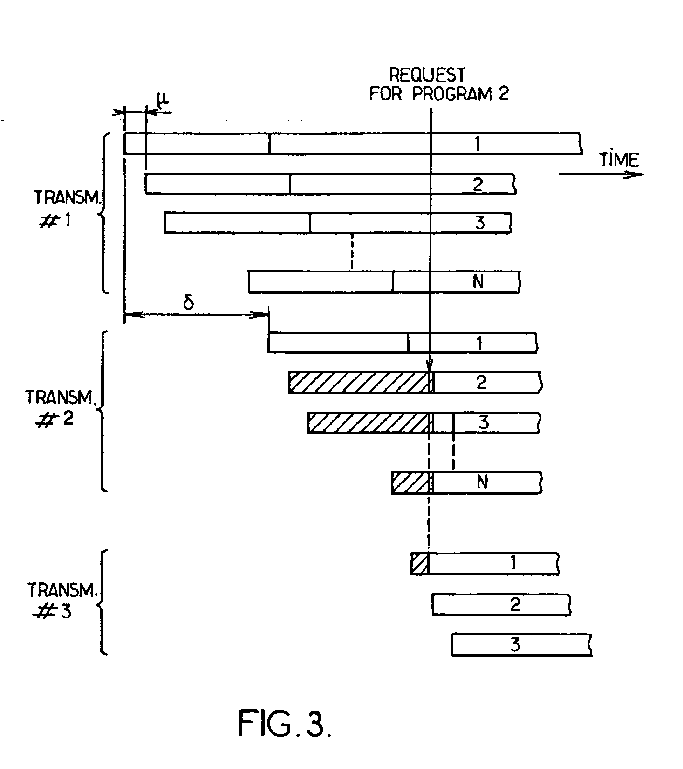

The requirements as to the buffer size and / or the required resources are significantly reduced by offsetting the starts of transmissions of a same set of programs by a fraction of the time interval. In a preferred arrangement, illustrated on Fig. 3, the starts of the N programs are evenly distributed inside a period equal to the staggered time interval, i.e. at intervals $\mu = \delta / N$ . The transmitted portion of each program which is stored in the buffer is as indicated in crossed lines. It could as well be a same sequence of evenly decreasing storage periods starting from another program.

In a first embodiment, which permits starting viewing any video program immediately upon request, except from a situation where another program is being watched, a saving ratio close to [(N - 1) / 2N ] on the network or satellite link resource may be achieved for a same buffer size, as compared with a situation where transmissions of all programs of a same set start simultaneously. When there is a high number of different transmitted programs in the set, the resource saving may approach 50 % in that case.

Referring to Fig. 3 two successive transmissions of a set of N = 7 programs and part of a third transmission are illustrated. Transmissions of the programs begin at intervals of $\delta / N$ Assuming that the maximum buffer size available for program storage is Co, corresponding to a time duration To, then the minimum staggered time $\delta m$ acceotable between two transmissions of the same program is $\delta m = To / N$.

When it is necessary or preferable to transmit the whole program for simultaneous access by any user in the arrangement of Fig. 2 and each program has the same duration D, then the number of simultaneously transmitting channels Sallvp required for all programs is :

$$Sallvp = D / \delta m \cdot N$$
$$= D / To \cdot N^2 \qquad\qquad (1)$$

If on the other hand use is made of the approach illustrated in Fig. 3, the worst case again occurs when there is a request for a video program is just before the beginning of a transmission of that program, as indicated at time t2 when program 2 is selected. Then the transmitted portion which does not need to be permanently stored in the buffer corresponds to the blank spaces. The time periods which must be stored are then as follows :

Video program 1 : $\mu$
Video program 2 : $N\mu = \delta m$
Video program 3 : $2\mu$
............
Video program N : $(N - 1) \mu$

The total duration To to be stored is then :

$$To = \mu + 2\mu + 3\mu + 4\mu + ..... + (N - 1) \mu + N\mu = N \cdot (N+1) \cdot \mu / 2 \ ,$$

whatever the program which is selected.

Such a storing method permits to start watching any of the video program at any time but does not allow to start watching any other program than the selected one once watching has started.

As a consequence,

$$\delta m = 2To/(N+1)$$

The number

$$S_{allvp} = ND/\delta m$$
$$= D/To.N.(N+1)2$$

A comparison with (1) shows that the number of simultaneous transmitting channels for all the video programs for a given storage capacity has been reduced by a factor $(N+1)/2N$ compared to the baseline case.

The reduction is in the ratio $(N-1)/2N$

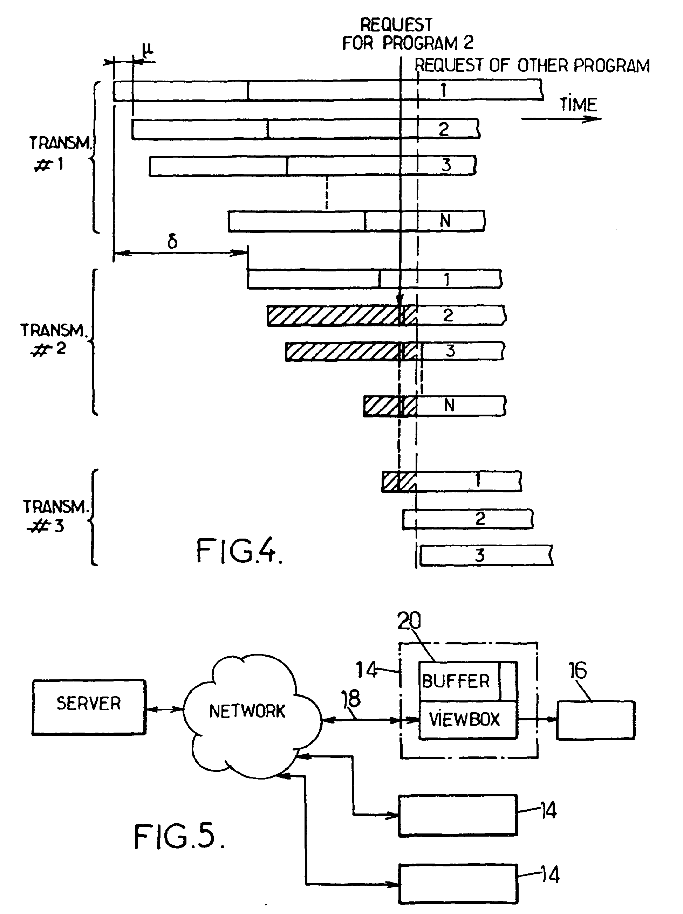

Another embodiment (Fig. 4) offers the possibility for starting watching any of the N video programs at any time, including during watching a given program; in that case the communications network or satellite link is optimized for saving a percentage of $(N^2-3N+2)/(2N^2)$ of the network resource with respect to the case where no time shift is applied between the transmission starting times of the different video programs. In that case additional storing duration $\delta$ for the watched program during watching of the program has to be provided.

The worst case is when a selected video program is requested at the end of the beginning portion. Then the contiguous slicing process implies to allocate the storing duration $\delta$ for the program during the whole watching. The worst case is selection $\mu$ seconds after the first program was selected.

As illustrated on Fig. 4, just before the beginning portion of video program 3 stops (worst case), the periods for which transmission has to be stored are:

Video program 1: $2\mu$
Video program 2: $\mu$
Video program 3: $N\mu$
Video program 4: $(N-1)\mu$
...
Video program N: $3\mu$

Thus the total "duration" that has to be stored on the user buffer device is:

$$To=2\mu + 3\mu +...+(N-1)/N\mu = N\mu + \delta = (\mu + 2\mu + 3\mu +...+ N\mu) + N\mu - \mu - N(N+1)\mu/2 + N\mu-\mu$$
$$To = \mu(N(N+1)/2+N-1)$$

Again the sum is constant whatever the program previously watched and the newly selected program watching any of the video programs may be started at any time and watching another program than the firstly selected one is possible once watching has started.

When fulfilling the necessary conditions:

$$To = (N(N+1)/2+N-1).\delta m/N$$

Hence:

$$\delta m = To / ((N+1)/2+1-1/N)$$

$$S_{allvp} = N D / \delta m$$

$$= D / t\alpha. [N(N+1) / 2 + N-1]$$

The number of simultaneous transmitting channels for all the video programs has been reduced by a factor (N(N+1)/2+N-1/$N^2$ as compared with formula (1) to the baseline case. This corresponds to a reduction ratio of:

$$(1-(N(N+1)/2+N-1)/N^2) = ((N^2-3N+2)/(2N^2))$$

The system schematically illustrated in Fig. 5 includes a server 10 connected to an interactive network 12 allowing transfer of data to and from user's terminals 14 via a plurality of channels. Each terminal 14 may be conventional in nature and be a decoder of available type, typically having a view box in compliance with commercial standards as DVD, MPEG 2, MPEG 4, VIDEO CD, MACROVISION. The terminal is connected to or embodied in one or more TV sets 16 and is connected to the network by a bi-directional transmission line 18. It further includes a buffer 20 of sufficient size for fulfilling the above requirements and various conventional components, including a processing unit 22 in which software for determining the end of the beginning period and splicing the video program portions is stored. Such processing unit controls the various steps which have been defined hereinabove.

**Claims**

1. A method of providing video-on-demand (VOD) comprising the steps of:

   - repeatedly transmitting a set comprising a plurality of N video programs at staggered time intervals ($\delta$) from a VOD server to a network for access by a view box of an user, and
   - responsive to a request for access to a selected one of said programs by said user,

   selecting that in-progress transmission of the selected program for which a lead-in portion is shortest and storing said program in a buffer associated with the view box as it is transmitted,
   selecting, in a memory associated with the view box, a previously stored beginning portion of said selected program having a time length sufficient to compensate for that of said staggered time intervals and outputting said beginning portion to said view box for display, and
   continuously splicing the in-progress transmission stored in the buffer to a conclusion of the beginning portion,
   all different video programs in a same set being transmitted with time shifts ($\mu$) equal to a fraction of the staggered time interval ($\delta$).

2. A method according to claim 1, wherein all time shifts ($\mu$) between two successive transmissions are a same fraction 1/N of the staggered time interval ($\delta$).

3. A method according to claim 1 or 2, further comprising the step of downloading said beginning portion of a specific said program into all view boxes connected to said server during a last period of low network load prior to availability of said program from the server.

4. A video on demand system having :

   - at a head end of the network, a server for repeatedly transmitting a set comprising a plurality of N video programs at staggered time intervals ($\delta$) to a network for access by a view box of an user, and
   - at user's ends, a plurality of view boxunits each having a bidirectional connection with said server, each said viewbox unit comprising :
   - a buffer for simultaneous writing in of a program transmitted on the network by said server and read out of said program with a time difference between writing in and read out of a same portion,
   - memory means for storing beginning portions of predetermined duration of a plurality of programs adapted to be received and displayed by said view box unit,

- user operated means for selectively tuning said view box unit for reception of a program repeatedly originating from said server as successive transmissions at time intervals on different channels, and storing that transmission of said program which began most recently as it proceeds,
- means for reading out the beginning portion of the program which has been selected from the memory means , and
- switching means for splicing the selected beginning portion with the following portion of the same program for display when said following portion becomes available from the buffer,

said server being arranged for transmitting all different video programs in a same set with time shifts ($\mu$) equal to a fraction of the staggered time interval ($\delta$).

**5.** A system according to claim 4, wherein said buffer is part of said memory means.

**Patentansprüche**

**1.** Verfahren zum Bereitstellen von Video-on-demand (VOD), umfassend die Schritte:

- wiederholtes Übertragen eines Satzes, welcher eine Mehrzahl von N Videoprogrammen umfasst, zu versetzten Zeitintervallen ($\delta$) von einem VOD-Server zu einem Netzwerk für den Zugriff durch eine Anzeigebox eines Anwenders, und
- in Reaktion auf eine Zugriffsanforderung auf ein ausgewähltes Programm durch den Anwender,
Auswählen derjenigen im Gange befindlichen Übertragung des ausgewählten Programms, für welche ein Einführungsabschnitt am kürzesten ist, und Speichern des Programms in einem der Anzeigebox zugeordneten Puffer, wenn es übertragen wird,
Auswählen eines zuvor gespeicherten Anfangsabschnitts des ausgewählten Programms, welcher eine Zeitdauer aufweist, die ausreichend ist zum Kompensieren der Zeitdauer der versetzten Zeitintervalle, in einem der Anzeigebox zugeordneten Speicher und Ausgeben des Anfangsabschnitts an die Anzeigebox zur Anzeige, und
kontinuierliches Zusammenfügen der im Gange befindlichen Übertragung, welche im Puffer gespeichert ist, mit einem Abschluss des Anfangsabschnitts,

wobei alle unterschiedlichen Videoprogramme in einem gleichen Satz mit Zeitverschiebungen ($\mu$) übertragen werden, die gleichgroß wie ein Bruchteil des versetzten Zeitintervalls ($\delta$) sind.

**2.** Verfahren nach Anspruch 1, wobei alle Zeitverschiebungen ($\mu$) zwischen zwei aufeinanderfolgenden Übertragungen ein gleicher Bruchteil 1/N des versetzten Zeitintervalls ($\delta$) sind.

**3.** Verfahren nach Anspruch 1 oder 2, ferner umfassend den Schritt:

Herunterladen des Anfangsabschnitts eines spezifischen Programms in alle Anzeigeboxen, welche vor der Verfügbarkeit des Programms vom Server während einer letzten Periode geringer Netzbelastung mit dem Server verbunden sind.

**4.** Video-on-demand-System, umfassend:

- an einem Kopfende des Netzwerks einen Server zum wiederholten Übertragen eines Satzes, welcher eine Mehrzahl von N Videoprogrammen enthält, zu versetzten Zeitintervallen ($\delta$) zu einem Netzwerk für den Zugriff durch eine Anzeigebox eines Anwenders, und
- an den Benutzerenden mehrere Anzeigeboxeinheiten, von denen jede eine bidirektionale Verbindung mit dem Server aufweist, wobei jede Anzeigeboxeinheit umfasst:

- einen Puffer zum Schreiben von einem durch den Server auf dem Netzwerk übertragenen Programm und zum gleichzeitigen Auslesen des Programms mit einer Zeitdifferenz zwischen dem Schreiben und Lesen eines gleichen Abschnitts,
- Speichermittel zum Speichern von Anfangsabschnitten vorbestimmter Dauer von mehreren Programmen, welche dazu eingerichtet sind, von der Anzeigeboxeinheit empfangen und angezeigt zu werden,
- Anwenderbetätigte Mittel zur selektiven Abstimmung der Anzeigeboxeinheit für den Empfang eines Programms, welches wiederholt vom Server als aufeinanderfolgende Übertragungen zu Zeitintervallen auf unterschiedlichen Kanälen stammt, und Speichern der Übertragung des Programms, die als letztes begonnen hat, während ihres Verlaufs,
- Mittel zum Auslesen des Anfangsabschnitts des Programms, das vom Speichermittel ausgewählt worden ist, und
- Schaltmittel zum Zusammenfügen des ausgewählten Anfangsabschnitts mit dem nachfolgenden Abschnitt des gleichen Programms zur Anzeige, sobald der nachfolgende Abschnitt aus dem Puffer verfügbar ist,

wobei der Server zum Übertragen von allen unterschiedlichen Programmen in einem gleichen Satz mit Zeitverschiebungen ($\mu$) eingerichtet ist, welche gleich groß wie ein Bruchteil des versetzten Zeitintervalls ($\delta$) sind.

**5.** System nach Anspruch 4, bei dem der Puffer ein Teil des Speichermittels ist.

**Revendications**

**1.** Procédé pour délivrer une vidéo à la demande (VOD) comprenant les étapes consistant à :

- transmettre de manière répétée un ensemble comprenant une pluralité de N programmes vidéo à des intervalles de temps décalés ($\delta$) à partir d'un serveur de VOD vers un réseau pour un accès par un dispositif de visualisation d'un utilisateur, et
- en réponse à une demande d'accès à un programme sélectionné parmi lesdits programmes par ledit utilisateur, sélectionner la transmission en cours du programme sélectionné pour lequel une partie de zone d'entrée est la plus courte et stocker ledit programme dans un tampon associé au dispositif de visualisation au cours de la transmission,
sélectionner, dans une mémoire associée au dispositif de visualisation, une partie de début précédemment stockée dudit programme sélectionné possédant une durée suffisante pour compenser celle desdits intervalles de temps décalés et délivrer ladite partie de début audit dispositif de visualisation pour affichage, et
coller continuellement la transmission en cours stockée dans le tampon à une fin de la partie de début,
tous les différents programmes vidéo dans un même ensemble étant transmis avec des décalages temporels ($\mu$) égaux à une fraction de l'intervalle de temps décalé ($\delta$).

**2.** Procédé selon la revendication 1, dans lequel tous les décalages temporels ($\mu$) entre deux transmissions successives sont une même fraction 1/N de l'intervalle de temps décalé ($\delta$).

**3.** Procédé selon la revendication 1 ou 2, comprenant en outre l'étape de téléchargement de ladite partie de début d'un dit programme spécifique dans tous les dispositifs de visualisation connectés audit serveur pendant une dernière période de faible charge de réseau avant la disponibilité dudit programme depuis le serveur.

**4.** Système de vidéo à la demande possédant :

- au niveau d'une tête de réseau, un serveur pour transmettre de manière répétée un ensemble comprenant une pluralité de N programmes vidéo à des intervalles de temps décalés ($\delta$) à un réseau pour un accès par un dispositif de visualisation d'un utilisateur, et
- au niveau de l'utilisateur, une pluralité de dispositifs unitaires de visualisation possédant chacun une connexion bidirectionnelle avec ledit serveur, chacun des dispositifs unitaires de visualisation comprenant :
- un tampon pour écrire simultanément un programme transmis sur le réseau par ledit serveur et lire ledit programme avec une différence temporelle entre l'écriture et la lecture d'une même partie,
- un moyen de mémoire pour stocker des parties de début d'une durée prédéterminée d'une pluralité de programmes adaptés pour être reçus et affichés par ledit dispositif unitaire de visualisation,
- un moyen activé par l'utilisateur pour régler de manière sélective ledit dispositif de visualisation pour la réception d'un programme issu de manière répétée dudit serveur au cours des transmissions successives à des intervalles de temps sur différents canaux, et stocker cette transmission dudit programme ayant commencé le plus récemment au cours de son déroulement,
- un moyen pour lire la partie de début du programme ayant été sélectionné à partir du moyen de mémoire, et
- un moyen de commutation pour coller la partie de début sélectionnée à la partie suivante du même programme pour un affichage lorsque ladite partie suivante devient disponible depuis le tampon,

ledit serveur étant agencé pour transmettre tous les différents programmes vidéo dans un même ensemble avec des décalages temporels (μ) égaux à une fraction de l'intervalle de temps décalé (δ).

5. Système selon la revendication 4, dans lequel ledit tampon fait partie dudit moyen de mémoire.

USER REQUEST FOR VIDEO
PROGRAM 1

FIG.1.

VIDEO PROGRAM 1

δ

VIDEO PROGRAM 1

STORED FOR USE

VIDEO PROGRAM 1

BEGINNING PORTION
SELECTIVELY SENT TO
A SIMPLE USER

VIDEO PROGRAM 2

SELECTION (REQUEST)

FIG.2.

PROGRAM 1

2

1ST
TRANSM

PERMANENTLY
STORED

TO BE
STORED

N

δ

STORED
PORTION

2ND
TRANSM

9

FIG.3.

FIG.4.

FIG.5.